(19) Europäisches Patentamt
European Patent Office
Office européen des brevets

(11) **EP 1 998 288 A1**

(12) **DEMANDE DE BREVET EUROPEEN**

(43) Date de publication:
**03.12.2008 Bulletin 2008/49**

(51) Int Cl.:
*G06T 7/20* *(2006.01)* *G06F 3/03* *(2006.01)*
*H04N 5/14* *(2006.01)*

(21) Numéro de dépôt: **08157359.4**

(22) Date de dépôt: **30.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **31.05.2007 FR 0755375**

(71) Demandeur: **STMICROELECTRONICS SA**
**92120 Montrouge (FR)**

(72) Inventeur: **Mellot, Pascal**
**38250 Lans en Vercors (FR)**

(74) Mandataire: **Cabinet Plasseraud**
**52 rue de la Victoire**
**75440 Paris Cedex 09 (FR)**

(54) **Procédé de détermination du déplacement d'une entité pourvue d'un capteur de séquence d'images, programme d'ordinateur, module et souris optique associés**

(57) Procédé de détermination du déplacement d'une entité pourvue d'un capteur de séquence d'images, comprenant une étape de détermination d'un vecteur de mouvement ($\mu_{n+1}$) associé à une image courante ($I_{n+1}$) en fonction d'au moins un calcul de corrélation entre un premier bloc de pixels dans l'image courante et un second bloc de pixels dans une image précédente de la séquence d'images à partir duquel le vecteur pointe vers ledit premier bloc de pixels,

selon lequel les dimensions ($X_{n+1}$, $Y_{n+1}$) du premier bloc sont déterminées en fonction d'au moins un vecteur de mouvement ($\mu_n$, $\mu_{n-1}$) associé à une image précédente de la séquence d'images.

$$\text{CALCUL } V_n = F \cdot \frac{\mu_n + \mu_{n+1} \cdots + \mu_{n-k+1}}{k} \quad 101$$

$$\text{CALCUL } V_{n-1} = F \cdot \frac{\mu_{n-1} + \mu_{n-2} + \cdots + \mu_{n-k}}{k} \quad 102$$

103
$$V_n \geq V_{n-1} ?$$

oui    NON

105
$$X_{n+1} = X_n - a$$
$$Y_{n+1} = Y_n - b$$

104
$$X_{n+1} = X_n + a$$
$$Y_{n+1} = Y_n + b$$

Proc 1

Proc 2

FIG.3.

EP 1 998 288 A1

**Description**

La présente invention concerne les techniques d'estimation de mouvement applicables à une séquence d'images fournies, directement ou indirectement, par un capteur d'images en mouvement, afin par exemple de déterminer le mouvement d'une entité pourvue de ce capteur d'images.

La présente invention est, notamment, particulièrement adaptée pour une utilisation dans une souris optique qui peut être reliée à un ordinateur dans les systèmes informatiques.

Généralement, on déplace la souris sur une surface adaptée et un capteur vidéo, fixé sur la souris, capture des images de cette surface pendant son déplacement. Le déplacement de la souris peut alors être reconstruit à partir des positions relatives d'objets dans les images capturées successives. Ainsi, à partir de ce déplacement, on en déduit le déplacement qui peut être donné à un curseur représentant le mouvement de la souris sur l'écran de l'ordinateur.

Certains procédés de ce type sont utilisés dans un autre domaine technique qui est celui de la compression de flux de vidéo.

Les techniques d'estimation de mouvement d'une entité à partir d'une séquence d'images sont basées sur une association d'un vecteur de mouvement à chacune des images traitées. Un tel vecteur a une composante verticale et une composante horizontale. Il représente le mouvement de la souris d'une image à l'autre. Le mouvement de tous les pixels de chaque image à traiter peut être représenté par un seul vecteur de mouvement.

Ce type de dispositif est soumis à des contraintes techniques spécifiques, notamment une contrainte temporelle. En effet, le traitement des images doit être effectué dans un temps très court afin que le mouvement de la souris puisse être retranscrit sur l'écran de l'ordinateur de manière quasi instantanée pour l'utilisateur. Une autre contrainte très importante de ce type de dispositif est le coût de production.

Dans certains cas, afin de réduire notamment le temps de traitement, on estime le mouvement de la souris entre deux images qui se suivent en déterminant le mouvement d'une portion de l'image uniquement entre les deux images, composée d'un bloc de pixels donné. Dans ce quoi suit, on appelle "bloc de corrélation" le bloc de pixels ainsi utilisé. La taille de ce bloc est par ailleurs nommée "fenêtre de corrélation".

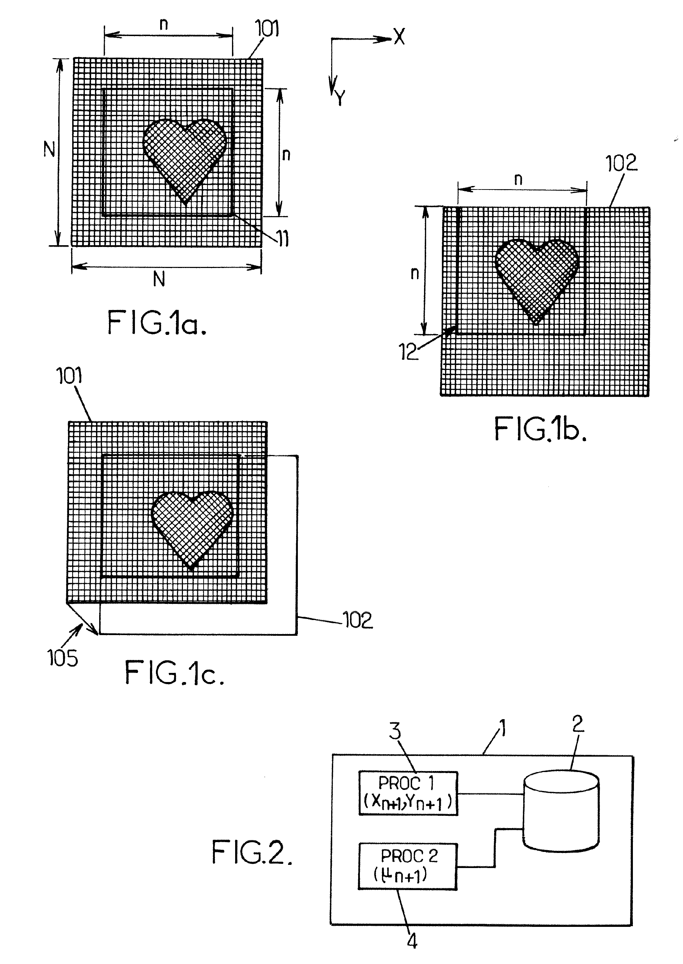

Les figures 1a, 1b et 1c illustrent une définition d'un vecteur de mouvement entre deux images 101 et 102 successivement traitées d'une séquence. L'image 101 est une image précédemment traitée : un vecteur de mouvement lui a donc été déjà associé. L'image 102 est une image en cours de traitement en vue de lui associer un vecteur de mouvement représentant le mouvement de la souris effectué entre l'image 101 et l'image 102.

Les images de la séquence parmi lesquelles les images 101 et 102 comprennent un nombre donné de pixels chacune, par exemple NxN pour une image carrée d'une dimension de N pixels sur N pixels. Par exemple, N est égal à 20.

Le vecteur de mouvement entre les deux images 101 et 102 est déterminé sur la base d'un bloc de pixels de dimensions fixées compris dans les images.

Par exemple, la taille du bloc de pixels est de x multiplié par y, si le bloc est de longueur x pixels selon l'axe X (axe horizontal, par exemple) et de largeur y pixels selon l'axe Y (axe vertical, par exemple). Par exemple, x=y=n. Par exemple, quand N est égal à 20, n est égal à 14.

Pour déterminer le vecteur de mouvement entre les deux images 101 et 102, on considère dans l'image 101, par exemple le bloc 11 de pixels de dimension n pixels sur n pixels, centré par rapport au centre de l'image 101.

On définit ensuite des vecteurs de mouvement candidats, c'est-à-dire des vecteurs qui sont susceptibles de représenter le mouvement de la souris entre les deux images 101 et 102. Ces vecteurs candidats sont généralement définis en fonction de vecteurs de mouvement précédemment associés à des images antérieures à l'image 102 dans la séquence d'images captées par la souris.

Puis, en considérant successivement chaque vecteur de mouvement candidat ainsi défini :

- on applique le vecteur de mouvement candidat au bloc de pixels 11 défini dans l'image 101 : le résultat de cette translation appliquée au bloc de pixels 11 est un bloc de pixels de dimension n pixels sur n pixels pointé dans l'image 102 ;

- on effectue ensuite un calcul de corrélation entre les valeurs des pixels du bloc 11 de pixels de l'image 101 et les valeurs des pixels du bloc de pixels pointé correspondant dans l'image 102.

On sélectionne ensuite le vecteur de mouvement candidat, parmi les vecteurs de mouvement considérés successivement, pour lequel on a calculé la plus grande corrélation. Ce dernier est ensuite associé à l'image courante 102.

Dans le cas considéré en référence aux figures 1a, 1b et 1c, le vecteur de mouvement sélectionné est représenté par la flèche 105. Ainsi, le mouvement de la souris entre l'image 101 et l'image 102 est représenté par ce vecteur de mouvement 105 associé à l'image 102.

Le résultat de la translation, par le vecteur de mouvement 105 sélectionné, du bloc de corrélation 11, dont les dimensions sont de n pixels sur n pixels, de l'image 101 est le bloc 12 dont les dimensions sont de n pixels sur n pixels de l'image 102.

La taille du bloc de corrélation utilisé pour estimer le déplacement de la souris a un impact sur les performances de l'estimation du mouvement de la souris.

Tout d'abord, la taille du bloc de corrélation par rapport à la taille de l'image limite les valeurs maximales détectables du vecteur de mouvement représentant le mouvement de la souris entre deux images.

Ensuite, plus la taille du bloc de corrélation est grande par rapport à la taille de l'image, plus l'estimation du mouvement est précise car elle est alors moins sensible aux bruits, le ratio de signal à bruit diminuant lorsque le nombre de pixels augmente. Mais lorsque la taille du bloc de corrélation par rapport à l'image est importante, permettre l'estimation de vecteurs de mouvements dans les cas de grande vitesse de déplacement de la souris nécessite une fréquence de capture d'image et une fréquence de traitement d'image importantes.

Et enfin, plus la taille du bloc est petite par rapport à la taille de l'image, plus il est possible de déterminer des vecteurs de mouvement correspondant à de grandes vitesses de déplacement de la souris, à fréquence de capture d'images constante.

Il est donc nécessaire de réaliser un compromis entre la précision de l'estimation, la fréquence de capture des images et la taille de l'image.

Un module d'estimation fiable du mouvement de la souris nécessite de vérifier au moins deux contraintes parmi les suivantes : un capteur comportant un réseau d'éléments capteurs de grandes dimensions, une grande fréquence de capture des images et une taille de bloc de corrélation importante. Chacune de ces contraintes est coûteuse, en termes de matériel et/ou de puissance de calcul.

La présente invention vise à réduire les contraintes à respecter en vue de réaliser une estimation fiable du mouvement d'une entité munie d'un capteur d'images. A cet effet, suivant un premier aspect, l'invention propose un procédé de détermination du déplacement d'une entité pourvue d'un capteur de séquence d'images, comprenant une étape de détermination d'un vecteur de mouvement associé à une image courante de la séquence d'images, en fonction d'au moins un calcul de corrélation effectué entre un premier bloc de pixels dans l'image courante et un second bloc de pixels dans une image précédente de la séquence d'images à partir duquel le vecteur pointe vers ledit premier bloc de pixels.

Selon un tel procédé, les dimensions du premier bloc sont déterminées en fonction d'au moins un vecteur de mouvement associé à une image précédant l'image courante dans la séquence d'images.

Un tel procédé, permet d'adapter le traitement effectué en fonction de la vitesse de déplacement de la souris et a pour effet de permettre la détermination des vecteurs de mouvement pour une même vitesse de déplacement maximale de la souris que dans l'art antérieur, tout en utilisant un réseau de capteurs de taille inférieure et/ou une fréquence de capture d'images inférieure à celles qui sont requises dans l'art antérieur.

Similairement, un tel procédé permet d'obtenir la même précision de l'estimation de déplacement à vitesse de déplacement faible, tout en utilisant un réseau de capteurs de taille inférieure et/ou en utilisant une fréquence de capture d'images inférieure à celles qui sont requises dans l'art antérieur.

Dans un mode de réalisation, la taille du premier bloc est une fonction décroissante du vecteur de mouvement associé à l'image précédente de la séquence d'images. Cette disposition permet de déterminer avec précision pour l'image courant un vecteur de mouvement de norme supérieure à la norme maximale déterminable dans l'image précédente quand la vitesse augmente.

Dans un mode de réalisation, les dimensions du premier bloc sont déterminées en fonction au moins des vecteurs de mouvement respectivement associés à des images précédentes de la séquence d'images. Cette disposition permet de lisser la variation de la taille du bloc sur plusieurs images.

Dans un mode de réalisation, on estime, en fonction d'au moins les vecteurs de mouvement respectivement associés à des images précédentes de la séquence, un paramètre indiquant une évolution d'une vitesse de déplacement de l'entité et la taille du premier bloc est une fonction décroissante dudit paramètre. Cette disposition permet de déterminer avec précision pour l'image courant un vecteur de mouvement de norme supérieure à la norme maximale déterminable dans l'image précédente quand la vitesse augmente.

Dans un mode de réalisation, on détermine la taille du premier bloc en outre en fonction d'au moins une taille de bloc utilisée lors de la détermination du vecteur de mouvement associé à au moins une image précédente. Cette disposition permet une adaptation plus fine de la taille du bloc en fonction de l'évolution de la vitesse de déplacement de la souris.

Dans un autre mode de réalisation, la taille du bloc ne dépend pas de la taille du bloc précédent, mas uniquement d'un, respectivement des, vecteur(s) de mouvement déterminés pour une, respectivement des, images précédentes.

Dans un mode de réalisation, on estime, en fonction d'au moins les vecteurs de mouvement respectivement associés à des images précédentes de la séquence, un paramètre indiquant une évolution d'une vitesse de déplacement de l'entité.

Si le paramètre indique une augmentation de cette vitesse, la taille déterminée du premier bloc est inférieure à la taille de bloc utilisée lors de la détermination du vecteur de mouvement associé à une image précédente. Cette disposition permet, une fois qu'il a été détecté que la vitesse de déplacement de la souris augmentait, de déterminer un vecteur de mouvement de norme supérieure à la norme maximale précédemment déterminable.

Dans un mode de réalisation, si le paramètre indique une diminution de cette vitesse, la taille déterminée du premier bloc est supérieure à la taille de bloc utilisée lors de la détermination du vecteur de mouvement associé à une image précédente. Cette disposition permet de déterminer le vecteur de mouvement avec une meilleure précision que lors de la précédente détermination, tout en garantissant que la valeur maximale de vecteur de déplacement déterminable selon la nouvelle taille du bloc de corrélation convient pour l'estimation à réaliser.

Dans un mode de réalisation, pour déterminer un vecteur de mouvement associé à une image courante de la séquence d'images, les étapes consistant à :

- générer une pluralité de vecteurs de mouvement candidats,
- pour chacun des vecteurs de mouvements candidats, effectuer un calcul de corrélation entre le premier bloc de pixels dans l'image courante et un second bloc de pixels dans une image précédente de la séquence d'images à partir duquel ledit vecteur candidat pointe vers ledit premier bloc de pixels ;
- sélectionner un vecteur de mouvement en fonction d'une comparaison entre les calculs de corrélation effectués et associer ledit vecteur de mouvement sélectionné à l'image courante.

Suivant un deuxième aspect, l'invention propose un produit programme d'ordinateur, pouvant par exemple être installer dans un module de détermination de déplacement d'une entité pourvue d'un capteur de séquence d'images, ce programme comprenant des instructions pour mettre en oeuvre les étapes d'un procédé suivant le premier aspect lors d'une exécution du programme par des moyens de traitement du module.

Suivant un troisième aspect, l'invention propose un module de détermination de déplacement d'une entité pourvue d'un capteur de séquence d'images comprenant des moyens adaptés pour mettre en oeuvre un procédé suivant le premier aspect de l'invention. Par exemple, le module peut comprendre des moyens de traitement adaptés pour exécuter le programme d'ordinateur selon le troisième aspect.

Suivant un quatrième aspect, l'invention propose une souris optique comprenant un capteur d'images et un module de détermination suivant le premier aspect de l'invention.

D'autres caractéristiques et avantages de l'invention apparaîtront encore à la lecture de la description qui va suivre. Celle-ci est purement illustrative et doit être lue en regard des dessins annexés sur lesquels :

- les figures 1a, 1b et 1c , déjà analysées, illustrent une définition d'un vecteur de mouvement entre deux images successives d'une séquence d'images;
- la figure 2 représente un module de détermination de mouvement dans un mode de réalisation de l'invention ;
- la figure 3 illustre les étapes d'un procédé de détermination de mouvement, comprenant deux processus Proc1 et Proc2 dans un mode de réalisation de l'invention ; et,

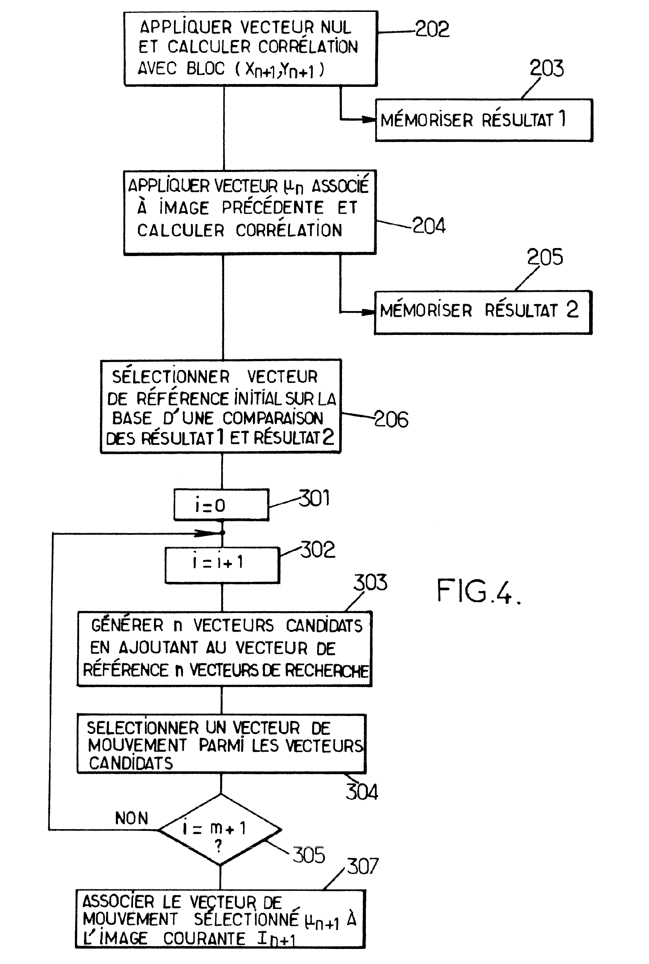

- la figure 4 illustre plus précisément les étapes du processus Proc2 dans un mode de réalisation de l'invention.

La présente invention est plus particulièrement décrite dans son application à la détection de déplacement d'une souris optique. Bien sûr, il est aisé d'en déduire une application à tout système dans lequel on applique un traitement à une séquence d'images pour détecter des mouvements d'un capteur mobile par rapport à un repère fixe.

La figure 2 représente un module 1 de détermination de mouvement dans un mode de réalisation de l'invention, comprenant une mémoire 2, un module 3 adapté pour mettre en oeuvre un premier processus Proc1 et un module 4 adapté pour mettre en oeuvre un second processus Proc2. Ce processus Proc2 s'appuie sur les principes d'un procédé tel que décrit dans la demande de brevet FR0507167.

Dans un mode de réalisation, le module 1 est embarqué sur la souris optique, de même que le capteur mobile.

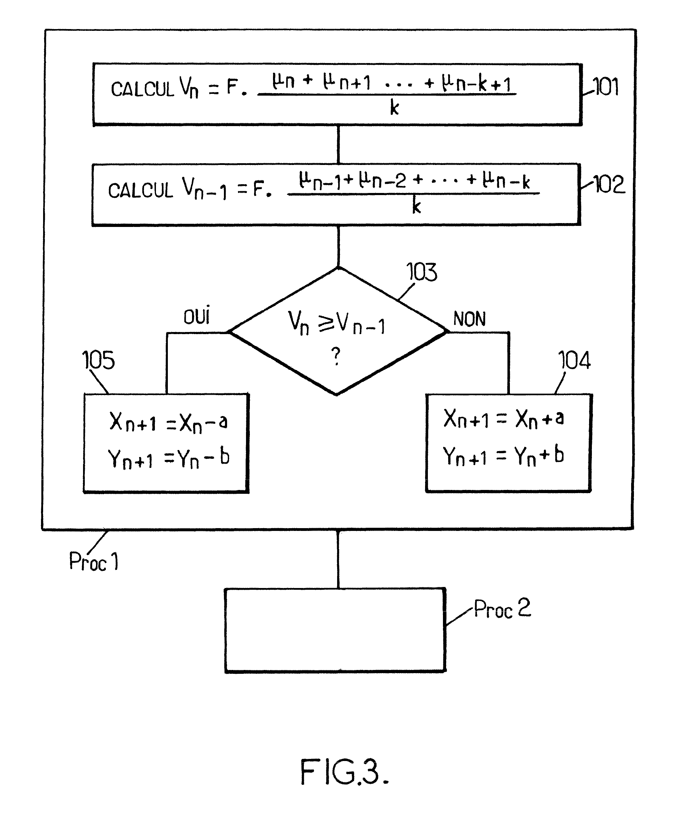

La figure 3 illustre les principales étapes d'un procédé de détermination de déplacement selon un mode de réalisation de la présente invention.

Ces étapes peuvent être appliquées relativement à chaque image captée par le capteur d'images solidaires de la souris. C'est le cas considéré ci-après, la fréquence de capture d'images étant égale à F images/ seconde.

Bien sûr, dans certaines circonstances, il peut être avantageux de ne traiter qu'une partie des images captées à l'aide de ces étapes.

Considérons qu'une pluralité d'images, de taille fixe, de la séquence $I_1$, $I_2$, ..., $I_n$ ont précédemment été traitées. Il a donc été associé à chacune de ces images un vecteur de mouvement de dimension 2, selon les axes X et Y, respectivement $\mu_1$, $\mu_2$, ..., $\mu_n$, dont les valeurs ont été mémorisées dans la mémoire 2 du module 1 de détermination de mouvement. Ces vecteurs de mouvement peuvent ainsi être lus, de manière asynchrone, par une fonction d'affichage qui se base sur ces vecteurs pour déplacer un symbole (par exemple un curseur) sur un écran d'ordinateur dont le mouvement suit alors le mouvement de la souris optique.

Les dimensions $X_n$, $Y_n$ (selon les axes X et Y) du bloc de corrélation, utilisé lors de la détermination du vecteur de mouvement associé à l'image $I_n$ ont également été mémorisées dans la mémoire 2 en association avec un identifiant de l'image $I_n$. Par ailleurs, les valeurs des pixels de l'image $I_n$ sont également stockées dans la mémoire 2.

**Détermination de la taille du bloc de corrélation à utiliser pour la détermination du vecteur de mouvement $\mu_{n+1}$ associé à l'image $I_{n+1}$**

Conformément au processus Proc1 mis en oeuvre par le module 3, pour une image $I_{n+1}$ en cours de traitement, on va déterminer l'évolution récente de la vitesse de déplacement de la souris et adapter, en fonction de cette évolution, la taille du bloc de corrélation à utiliser pour la détermination du vecteur de mouvement $\mu_{n+1}$ associé à l'image $I_{n+1}$.

A cette fin, dans une étape 101, on calcule une première valeur de vitesse moyenne $V_n$ de la souris, en fonction des vecteurs de mouvement $\mu_n, \mu_{n-1}, ..., \mu_{n-k+1}$ respectivement associés aux images $I_n, I_{n-1}, ..., I_{n-k+1}$ (par exemple, k=3) à l'aide de la formule suivante :

$$V_n = F \frac{\|\mu_n\| + \|\mu_{n-1}\| + ... + \|\mu_{n-k+1}\|}{k},$$

où $\|\mu_i\|$ représente la norme du vecteur de mouvement $\mu_i$ associé à l'image $I_i$, où i est un indice allant de i=n-k+1 à i=n.

Cette première valeur de vitesse prend ainsi en compte la vitesse de déplacement entre les images $I_{n-1}$ et $I_n$ déterminée en fonction du vecteur de mouvement associé à l'image $I_n$.

Dans une étape 102, on calcule une seconde valeur de vitesse moyennée $V_{n-1}$ de la souris en fonction des vecteurs de mouvement $\mu_{n-1}, \mu_{n-2}, ..., \mu_{n-k}$ respectivement associés des images $I_{n-1}, I_{n-2}, ..., I_{n-k}$ (par exemple, k=3) à l'aide de la formule suivante :

$$V_{n-1} = F \frac{\|\mu_{n-1}\| + \|\mu_{n-2}\| + ... + \|\mu_{n-k}\|}{k},$$

où $\|\mu_i\|$ représente la norme du vecteur de mouvement $\mu_i$ associé à l'image $I_i$, où i est un indice allant de i=n-k à i=n-1.

Dans un mode de réalisation, la valeur $V_n$ est mémorisée, de manière à pouvoir être réutilisée directement lors de la détermination de la taille du bloc de corrélation pour déterminer le vecteur de mouvement associé à l'image $I_{n+2}$.

Ensuite, dans une étape 103, on détermine l'évolution de la vitesse moyennée de déplacement de la souris, en comparant $V_n$ et $V_{n-1}$.

Si $V_n$ est supérieure à $V_{n-1}$, on en déduit que la vitesse de déplacement de la souris augmente. Sinon, on en déduit que la vitesse de déplacement de la souris diminue.

Puis on détermine la taille du bloc de corrélation utilisé par la suite dans le processus Proc2 en fonction de l'évolution de la vitesse de déplacement de la souris déterminée.

Dans une étape 104, s'il a été établi à l'étape 103 que la vitesse de déplacement de la souris diminue, alors la taille du bloc de corrélation utilisée pour la détermination du vecteur de déplacement associé à l'image $I_{n+1}$ est augmentée par rapport à la taille du bloc de corrélation utilisé précédemment pour la détermination du vecteur de déplacement associé à l'image In Par exemple, les dimensions $X_{n+1}, Y_{n+1}$ du bloc de corrélation utilisé lors de la détermination du vecteur de mouvement associé à l'image $I_{n+1}$ sont déterminées à l'aide de la formule suivante : $X_{n+1} = X_n + a$ et $Y_{n+1} = X_n + b$, avec a et b entiers naturels et non tous deux nuls et $X_n$ et $Y_n$ sont les dimensions du bloc de corrélation précédemment utilisé lors de la détermination du vecteur de mouvement associé à l'image $I_n$.

Dans une étape 105, s'il a été établi à l'étape 103 que la vitesse de déplacement de la souris augmente, alors la taille du bloc de corrélation utilisée pour la détermination du vecteur de déplacement associé à l'image $I_{n+1}$ est diminuée par rapport à la taille du bloc de corrélation utilisé précédemment pour la détermination du vecteur de déplacement associé à l'image $I_n$. Par exemple, les dimensions $X_{n+1}, Y_{n+1}$ du bloc de corrélation utilisé lors de la détermination du vecteur de mouvement associé à l'image $I_{n+1}$ sont déterminées à l'aide de la formule suivante : $X_{n+1} = X_n - a$ et $Y_{n+1} = X_n - b$, avec a et b entiers naturels et non tous deux nuls. Par exemple, a=b=1 pixel.

La taille du bloc de corrélation déterminée est alors $X_{n+1}$ x $Y_{n+1}$.

La profondeur k du lissage de la valeur de la vitesse de déplacement prise en compte est programmable.

D'autres techniques sont utilisables selon le procédé pour estimer une évolution de la vitesse de déplacement de la souris. En outre, d'autre techniques pour déterminer la manière dont est augmentée ou diminuée la taille du bloc de corrélation en fonction de l'évolution de la vitesse de déplacement de la souris sont également applicables.

### Détermination du vecteur de mouvement $\mu_{n+1}$ du bloc de corrélation de taille déterminée $X_{n+1}$ x $Y_{n+1}$

Puis, conformément au processus Proc2 mis en oeuvre par le module 4, pour une image $I_{n+1}$ en cours de traitement, on sélectionne en premier lieu un vecteur de mouvement de référence initial parmi un ensemble de vecteurs de mouvement.

Dans un mode de réalisation de l'invention, cet ensemble comprend le vecteur de composantes nulles ainsi que le vecteur de mouvement associé à l'image précédemment traitée $I_n$ dans la séquence d'images captées. On considère le bloc de pixels de dimension $X_{n+1}$, $Y_{n+1}$ défini ci-dessus en référence à l'image $I_{n+1}$, et on applique les étapes suivantes aux pixels de ce bloc de pixels.

A l'étape 202, on applique le vecteur nul au bloc de pixels, dans l'image $I_n$, de taille $X_{n+1}$ sur $Y_{n+1}$ définie ci-dessus, le bloc étant centré par rapport au centre de l'image $I_n$ et on effectue un calcul de corrélation entre la valeur des pixels du bloc de pixels considéré de l'image $I_n$ et la valeur des pixels du bloc de pixels pointé corres-

pondant dans l'image $I_{n+1}$.

A cet effet, on peut par exemple, pour chacun des pixels du bloc de corrélation dans l'image $I_n$, calculer la différence entre la valeur de ce pixel et la valeur du pixel pointé par le vecteur nul dans l'image $I_{n+1}$. On effectue ensuite la somme des valeurs absolues des différences ainsi obtenues et on obtient un premier résultat de corrélation.

A l'étape 203, le résultat de cette corrélation est ensuite pondéré par une valeur, qui est de préférence une valeur de configuration, avant d'être stocké en mémoire. Une telle pondération est bien sûr facultative et vise à améliorer la précision d'un tel procédé. Une valeur de pondération peut être avantageusement déterminée en fonction de la vitesse des images dans la séquence d'images captées.

Puis, à l'étape 204, on applique au bloc de pixels de taille $X_{n+1}$ sur $Y_{n+1}$ considéré dans l'image $I_n$, le vecteur de mouvement $\mu_n$ déjà associé à cette image. On effectue alors un calcul de corrélation. A cet effet, de préférence, on calcule pour chacun des pixels du bloc de pixels considéré dans l'image $I_n$, la différence entre la valeur d'un pixel donné de l'image $I_n$ et la valeur du pixel correspondant dans l'image $I_{n+1}$, c'est-à-dire le pixel de l'image $I_{n+1}$ pointé à partir du pixel donné par le vecteur de mouvement $\mu_n$ associé à l'image $I_n$.

On effectue la somme des valeurs absolues des différences et on obtient donc un second résultat de corrélation que l'on stocke en mémoire 2, à l'étape 205.

A l'étape 206, on compare le premier résultat et le second résultat de corrélation, et sur la base de cette comparaison, on sélectionne parmi le vecteur nul et le vecteur de mouvement associé à l'image $I_n$, le vecteur qui permet d'obtenir la plus grande corrélation.

A l'étape 301, on considère le vecteur de référence initial sélectionné et on initialise un index i à 0.

Puis, à l'étape 302, on incrémente l'index i d'une unité.

Ensuite, à l'étape 303, on génère k vecteurs candidats, k étant un nombre entier strictement supérieur à 1. Ces vecteurs candidats sont générés en ajoutant au vecteur de référence initial respectivement k vecteurs de recherche. Deux de ces vecteurs peuvent être de direction horizontale et de sens opposés respectifs, alors que les deux autres sont de direction verticale et de sens respectivement opposés. Ces k vecteurs de recherche peuvent donc être avantageusement au nombre de 4. Mais on peut avoir moins ou plus selon des directions autres que la verticale et l'horizontale.

A l'étape 304, un vecteur de mouvement est sélectionné parmi les vecteurs candidats ainsi générés. Une telle sélection peut être effectuée notamment en effectuant un calcul de corrélation, relativement à chacun de ces vecteurs candidats, entre le bloc de pixels de taille $X_{n+1}$ sur $Y_{n+1}$ déjà considéré dans l'image $I_n$ et le bloc de pixels dans l'image $I_{n+1}$ pointé par application du vecteur candidat sur le bloc de pixels considéré dans l'image $I_n$.

On effectue m+1 fois les étapes 302, 303 et 304, m étant un entier supérieur à 1. A cet effet, à l'étape 305, on compare la valeur de l'indice i à la valeur m+1. Dans le cas où i est inférieur à m+1, on effectue à nouveau les étapes 302 à 305.

Dans ce cas, à chaque répétition de l'étape 303, le vecteur de mouvement de référence est le vecteur de mouvement sélectionné à l'étape 304 qui vient d'être effectuée.

Après m répétitions des étapes 302 à 304, l'étape 307 est alors effectuée. A cette étape, on associe le vecteur de mouvement sélectionné à l'étape 304 précédente à l'image $I_{n+1}$ en cours de traitement.

Dans un mode de réalisation, tout ou partie des étapes indiquées ci-dessus sont effectuées suite à l'exécution, sur des moyens de calcul du module 1 de détermination de mouvement, d'instructions d'un programme d'ordinateur.

Dans le mode de réalisation décrit ci-dessus en référence aux figures, il a été considéré des images de forme carrée et des blocs de corrélation de forme carrée également. L'invention peut bien sûr être mise en oeuvre avec des images ainsi qu'avec des blocs de corrélation de forme variée, la forme d'un bloc de corrélation dans une image pouvant en outre être différente de la forme de l'image.

Dans un autre mode de réalisation, la détermination de la taille du bloc de corrélation pour déterminer le vecteur de mouvement associé à l'image $I_{n+1}$ est réalisée en fonction du seul vecteur de mouvement associé à l'image $I_n$ et non des vecteurs de mouvement associés à d'autres images (ainsi une valeur fixe de taille de bloc correspond à une valeur de vecteur de mouvement).

Dans un autre mode de réalisation, la détermination de la taille de bloc de corrélation pour déterminer le vecteur de mouvement associé à l'image $I_{n+1}$ est réalisée en fonction du seul vecteur de mouvement associé à l'image $I_n$ et non de vecteurs de mouvement associés à d'autres images, et en fonction de la taille du bloc de corrélation utilisé lors de la détermination du vecteur de mouvement associé à une image précédente, par exemple l'image $I_n$.

Dans un autre mode de réalisation, la détermination de la taille de bloc de l'image $I_{n+1}$ est réalisée en fonction du seul vecteur de mouvement associé à l'image $I_n$ et non de vecteurs de mouvement associés à d'autres images et en fonction de la taille des blocs de corrélation utilisés lors de la détermination du vecteur de mouvement associé à plusieurs images précédentes.

D'autres manières d'adapter la taille du bloc de corrélation peuvent bien sûr être mises en oeuvre selon l'invention.

## Revendications

**1.** Procédé de détermination du déplacement d'une entité pourvue d'un capteur de séquence d'images, comprenant une étape de détermination d'un vecteur de mouvement ($\mu_{n+1}$) associé à une image courante ($I_{n+1}$) de la séquence d'images en fonction d'au moins un calcul de corrélation effectué entre un premier bloc de pixels dans l'image courante et un second bloc de pixels dans une image précédente de la séquence d'images à partir duquel le vecteur pointe vers ledit premier bloc de pixels, **caractérisé en ce que** les dimensions ($X_{n+1}$, $Y_{n+1}$) du premier bloc sont déterminées en fonction d'au moins un vecteur de mouvement ($\mu_n$, $\mu_{n-1}$) associé à une image précédant l'image courante dans la séquence d'images.

2. Procédé selon la revendication 1, selon lequel la taille ($X_{n+1}* Y_{n+1}$) du premier bloc est une fonction décroissante du vecteur de mouvement ($\mu_n$, $\mu_{n-1}$) associé à l'image précédente de la séquence d'images.

3. Procédé selon la revendication 1, selon lequel les dimensions ($X_{n+1}$, $Y_{n+1}$) du premier bloc sont déterminées en fonction au moins des vecteurs de mouvement ($\mu_n$, $\mu_{n-1}$) respectivement associés à des images précédentes de la séquence d'images.

4. Procédé selon la revendication 3, selon lequel on estime, en fonction d'au moins lesdits vecteurs de mouvement ($\mu_n$, $\mu_{n-1}$) respectivement associés à des images précédentes de la séquence, un paramètre ($V_n$) indiquant une évolution d'une vitesse de déplacement de l'entité et selon lequel la taille du premier bloc est une fonction décroissante dudit paramètre.

5. Procédé selon l'une quelconque des revendications précédentes, selon lequel on détermine la taille ($X_{n+1}*Y_{n+1}$) du premier bloc en outre en fonction d'au moins une taille de bloc utilisée lors de la détermination du vecteur de mouvement ($\mu_n$) associé à au moins une image précédente.

6. Procédé selon la revendication 5, selon lequel on estime, en fonction d'au moins lesdits vecteurs de mouvement ($\mu_n$, $\mu_{n-1}$) respectivement associés à des images précédentes de la séquence, un paramètre ($V_n$) indiquant une évolution d'une vitesse de déplacement de l'entité et selon lequel si le paramètre indique une augmentation de ladite vitesse, la taille déterminée du premier bloc est inférieure à la taille de bloc utilisée lors de la détermination du vecteur de mouvement ($\mu_n$) associé à une image précédente.

7. Procédé selon la revendication 5 ou 6, selon lequel on estime, en fonction d'au moins lesdits vecteurs de mouvement ($\mu_n$, $\mu_{n-1}$) respectivement associés à des images précédentes de la séquence, un paramètre ($V_n$) indiquant une évolution d'une vitesse de déplacement de l'entité et selon lequel si le paramètre indique une diminution de ladite vitesse, la taille déterminée ($X_{n+1}*Y_{n+1}$) du premier bloc est supérieure à la taille de bloc utilisée lors de la détermination du vecteur de mouvement ($\mu_n$) associé à ladite image précédente.

8. Procédé selon l'une quelconque des revendications précédentes, comprenant, pour déterminer un vecteur de mouvement ($\mu_{n+1}$) associé à une image courante ($I_{n+1}$) de la séquence d'images, les étapes consistant à :

   - générer une pluralité de vecteurs de mouvement candidats,
   - pour chacun des vecteurs de mouvements candidats, effectuer un calcul de corrélation entre le premier bloc de pixels dans l'image courante et un second bloc de pixels dans une image précédente de la séquence d'images à partir duquel ledit vecteur candidat pointe vers ledit premier bloc de pixels ;
   - sélectionner un vecteur de mouvement ($\mu_{n+1}$) en fonction d'une comparaison entre les calculs de corrélation effectués et associer ledit vecteur de mouvement sélectionné à l'image courante ($I_{n+1}$).

9. Programme d'ordinateur à installer dans un module (1) de détermination de déplacement d'une entité pourvue d'un capteur de séquence d'images, ledit programme comprenant des instructions pour mettre en oeuvre les étapes d'un procédé selon l'une des revendications précédentes lors d'une exécution du programme par des moyens de traitement dudit module.

10. Module (1) de détermination de déplacement d'une entité pourvue d'un capteur d'images comprenant des moyens adaptés pour mettre en oeuvre un procédé selon l'une des revendications 1 à 8.

11. Souris optique comprenant un capteur d'images et un module de détermination selon la revendication 10.

FIG.1a.

FIG.1b.

FIG.1c.

FIG.2.

$$\text{CALCUL } V_n = F \cdot \frac{\mu_n + \mu_{n+1} \cdots + \mu_{n-k+1}}{k}$$ — 101

$$\text{CALCUL } V_{n-1} = F \cdot \frac{\mu_{n-1} + \mu_{n-2} + \cdots + \mu_{n-k}}{k}$$ — 102

103

$$V_n \geq V_{n-1} ?$$

OUI

NON

105

$$X_{n+1} = X_n - a$$
$$Y_{n+1} = Y_n - b$$

104

$$X_{n+1} = X_n + a$$
$$Y_{n+1} = Y_n + b$$

Proc 1

Proc 2

FIG.3.

APPLIQUER VECTEUR NUL
ET CALCULER CORRÉLATION
AVEC BLOC ( $X_{n+1}, Y_{n+1}$ ) ————202

MÉMORISER RÉSULTAT 1 ————203

APPLIQUER VECTEUR $\mu_n$ ASSOCIÉ
À IMAGE PRÉCÉDENTE ET
CALCULER CORRÉLATION ————204

MÉMORISER RÉSULTAT 2 ————205

SÉLECTIONNER VECTEUR
DE RÉFÉRENCE INITIAL SUR LA
BASE D'UNE COMPARAISON
DES RÉSULTAT 1 ET RÉSULTAT 2 ————206

i = 0 ————301

i = i + 1 ————302

**FIG.4.**

GÉNÉRER n VECTEURS CANDIDATS
EN AJOUTANT AU VECTEUR DE
RÉFÉRENCE n VECTEURS DE RECHERCHE ————303

SELECTIONNER UN VECTEUR DE
MOUVEMENT PARMI LES VECTEURS
CANDIDATS ————304

NON  $i = m + 1$ ? ————305

ASSOCIER LE VECTEUR DE
MOUVEMENT SÉLECTIONNÉ $\mu_{n+1}$ À
L'IMAGE COURANTE $I_{n+1}$ ————307

**Office européen des brevets**

## RAPPORT DE RECHERCHE EUROPEENNE

Numéro de la demande

EP 08 15 7359

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | YAP-PENG TAN ET AL: "Rapid Estimation of Camera Motion from Compressed Video with Application to Video Annotation" IEEE TRANSACTIONS ON CIRCUITS AND SYSTEMS FOR VIDEO TECHNOLOGY, IEEE SERVICE CENTER, PISCATAWAY, NJ, US, vol. 10, no. 1, février 2000 (2000-02), XP011014016 ISSN: 1051-8215 * abrégé; figures 1-5 * * page 135 - page 140 * | 1,3-11 | INV. G06T7/20 G06F3/03 H04N5/14 |
| Y | HAIFENG WANG ET AL: "An improved variable-size block-matching algorithm" MULTIMEDIA TOOLS AND APPLICATIONS, KLUWER ACADEMIC PUBLISHERS, BO, vol. 34, no. 2, 27 janvier 2007 (2007-01-27), pages 221-237, XP019506551 ISSN: 1573-7721 * abrégé; figures 10,13 * * page 222 - page 232 * | 1,3-11 | |
| A | US 2003/189548 A1 (ROVATI FABRIZIO [IT] ET AL) 9 octobre 2003 (2003-10-09) * le document en entier * | 1-11 | DOMAINES TECHNIQUES RECHERCHES (IPC) G06T H04N G06F |
| A | US 2007/040805 A1 (MELLOT PASCAL [FR]) 22 février 2007 (2007-02-22) * le document en entier * | 1-11 | |
| A | EP 1 574 994 A (ST MICROELECTRONICS SRL [IT]; ST MICROELECTRONICS SA [FR]) 14 septembre 2005 (2005-09-14) * le document en entier * | 1-11 | |

Le présent rapport a été établi pour toutes les revendications

| Lieu de la recherche | Date d'achèvement de la recherche | Examinateur |
|---|---|---|
| Munich | 18 juillet 2008 | Borotschnig, Hermann |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 7359

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2008

| Document brevet cité au rapport de recherche | Date de publication | Membre(s) de la famille de brevet(s) | Date de publication |
|---|---|---|---|
| US 2003189548 A1 | 09-10-2003 | EP 1361541 A1 | 12-11-2003 |
| US 2007040805 A1 | 22-02-2007 | EP 1746486 A1 | 24-01-2007 |
| EP 1574994 A | 14-09-2005 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 0507167